# FASCICULE DE BREVET EUROPEEN

(11) **EP 2 860 847 B1**
(45) Date de publication et mention de la délivrance du brevet: **08.06.2022**
(21) Numéro de dépôt: 14177886.0
(22) Date de dépôt: 21.07.2014
(51) Int. Cl.: H02K 1/14, H02K 3/34, H02K 1/18

(54) **Stator bobiné à remplissage d'encoches optimisé et machine électrique correspondante**
Bewickelter Stator mit optimierter Nutenfüllung, und entsprechende elektrische Maschine
Wound stator with optimised filling of slots and corresponding electric machine

(30) Priorité: 23.07.2013 FR 1357216
(43) Date de publication de la demande: 15.04.2015
(73) Titulaire: VALEO EQUIPEMENTS ELECTRIQUES MOTEUR, 94046 Créteil Cedex (FR)
(72) Inventeur: Leroy, Virginie, 93330 Neuilly sur Marne (FR); Bouarroudj, Lilya, 94220 Charenton le Pont (FR)
(74) Mandataire: Valeo Powertrain Systems

(56) Documents cités:
- EP-A1- 1 806 822
- EP-A1- 2 378 629
- EP-A2- 1 602 554
- JP-A- 2007 221 913
- US-A1- 2004 124 733
- US-A1- 2009 085 422

## Description

### DOMAINE TECHNIQUE DE L'INVENTION

L'invention porte sur un stator bobiné pour machine électrique tournante ainsi que sur la machine électrique tournante correspondante.

L'invention se rapporte au domaine des machines électriques tournantes telles que les moteurs, les alternateurs, ou les alterno-démarreurs.

### ARRIERE PLAN TECHNOLOGIQUE

On connaît des machines électriques comportant un stator et un rotor solidaire d'un arbre. Le rotor pourra être solidaire d'un arbre menant et/ou mené et pourra appartenir à une machine électrique tournante sous la forme d'un alternateur comme décrit dans le document EP0803962 ou d'un moteur électrique comme décrit dans le document EP0831580.

La machine électrique comporte un boîtier portant le stator. Ce boîtier est configuré pour porter à rotation l'arbre par exemple par l'intermédiaire de roulements, tels que des roulements à billes et/ou à aiguilles. Le rotor pourra comporter un corps réalisé en tôle feuilletée, qui comporte des logements. Des aimants permanents sont positionnés à l'intérieur d'au moins certains de ces logements comme visible par exemple dans les figures 1 et 2 du document EP0803962.

Comme décrit dans le document FR2890798 auquel on se reportera pour plus de précisions, la machine comporte un rotor à griffes et un corps de stator sous la forme d'un paquet de tôles doté de dents pour le montage de bobines appartenant au bobinage du stator. Le corps du stator comporte des encoches ouvertes vers l'intérieur délimitées chacune par deux dents consécutives. Ces dents sont à bords parallèles, une bande de matière, appelée culasse existant entre le fond des encoches et la périphérie externe du corps.

Afin de réaliser un bobinage dit "concentrique", on monte sur les dents du stator des bobines réalisées à partir d'un fil enroulé sur plusieurs tours. Les fils consistent par exemple en un fil de cuivre revêtu d'émail. Deux bobines sont implantées dans une même encoche, chaque bobine étant enroulée autour de l'une des dents délimitant l'encoche par l'intermédiaire d'un isolant de bobine. Les bobines sont interconnectées entre elles, par exemple par soudure ou à l'aide d'un connecteur pour former une phase de la machine qui pourra être du type polyphasée.

Le document japonais JP2004350450 enseigne l'utilisation d'un fil en forme de méplat, c'est-à-dire à section rectangulaire, pour réaliser chaque bobine. Toutefois, l'utilisation de dents à flancs parallèles combinée à celle d'un isolant en forme d'escalier qui oblige à réaliser un méplat de taille fixe ne permet pas d'obtenir un taux de remplissage d'encoche dépassant 50%. On rappelle que le taux de remplissage d'encoche correspond au rapport entre la section de fil conducteur nu et la section complète de l'encoche.

La demande EP2378629 divulgue un stator bobiné de machine électrique selon le préambule de la revendication 1.

### OBJET DE L'INVENTION

L'invention vise à maximiser le taux de remplissage des encoches du stator afin d'améliorer les performances de la machine.

A cet effet, l'invention a pour objet un stator bobiné de machine électrique tournante selon la revendication 1. Ainsi, l'utilisation en combinaison d'encoches à bords parallèles et d'un fil de section rectangulaire permet de maximiser le taux de remplissage de l'encoche en permettant notamment de combler de manière aisée les espaces au niveau des angles de l'encoche. Grâce à l'invention, il sera ainsi possible d'obtenir des taux de remplissage supérieurs à 50% pouvant atteindre 60% dans certaines applications.

Selon une réalisation, le stator comporte en outre un isolant de bobine monté autour de chaque dent.

Selon une réalisation, le fil de bobine de forme rectangulaire présente son plus grand côté orienté parallèlement aux flancs latéraux des dents délimitant l'encoche dans laquelle est positionné ledit fil de bobine.

Selon une réalisation, le fil de bobine de forme rectangulaire présente son plus grand côté orienté perpendiculairement aux flancs latéraux des dents délimitant l'encoche dans laquelle est positionné ledit fil de bobine.

Selon une réalisation, le fil de bobine présente une section carrée.

Selon une réalisation, le stator comporte des dents rapportées.

Selon une réalisation, l'enroulement du fil de bobine autour d'une dent rapportée est réalisé avant assemblage des dents rapportées pour former le stator.

Ainsi, on peut enrouler le fil autour d'une dent facilement sans être gêner.

Cela est d'autant plus intéressant qu'étant donné la forme de la dent à flancs non parallèles (qui permettent d'obtenir l'encoche à bords parallèles) il faut effectuer une torsion du fil lorsqu'on passe d'un flanc à un autre.

Selon une réalisation, chaque dent rapportée comporte deux branches correspondant à une portion de la culasse, lesdites branches de deux dents adjacentes étant aptes à coopérer entre elles pour former ledit stator.

Selon une réalisation, les dents rapportées comportent des moyens de fixation sur une paroi annulaire formant ladite culasse du stator.

Selon une réalisation, l'isolant de bobine est réalisé en deux parties.

Selon une réalisation, les deux parties de l'isolant de bobine sont découpées suivant un plan horizontal perpendiculaire à un axe dudit stator.

Selon une réalisation, le stator comporte des fentes situées de part et d'autre de chaque dent aptes à recevoir des saillies dudit isolant de bobine.

Selon une réalisation, le stator comporte en outre des moyens d'assemblage pour la fixation avec un boîtier de machine électrique tournante.

L'invention a également pour objet une machine électrique tournante munie d'un stator bobiné selon l'invention.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
La figure 1 montre une vue en perspective d'un stator bobiné conforme à l'invention;
La figure 2 est une vue de dessus du stator bobiné de la figure 1;
La figure 3a représente une vue en coupe transversale suivant une plan perpendiculaire à l'axe X du stator bobiné de la figure 1 ;
La figure 3b montre une vue en coupe d'un stator bobiné selon l'invention comportant des bobines formée partir d'un fil en forme de méplat ayant une orientation différente par rapport à celle de la figure 3a;
La figure 4 montre une vue de dessus d'une dent rapportée du stator selon l'invention;
La figure 5 est une vue en perspective d'un isolant de bobine réalisé en deux parties utilisé avec la dent rapportée de la figure 4;
La figure 6 est une vue en perspective d'un autre mode de réalisation du stator à dents rapportées.

Les éléments identiques, similaires, ou analogues conservent la même référence d'une figure à l'autre.

### DESCRIPTION D'EXEMPLES DE REALISATION DE L'INVENTION

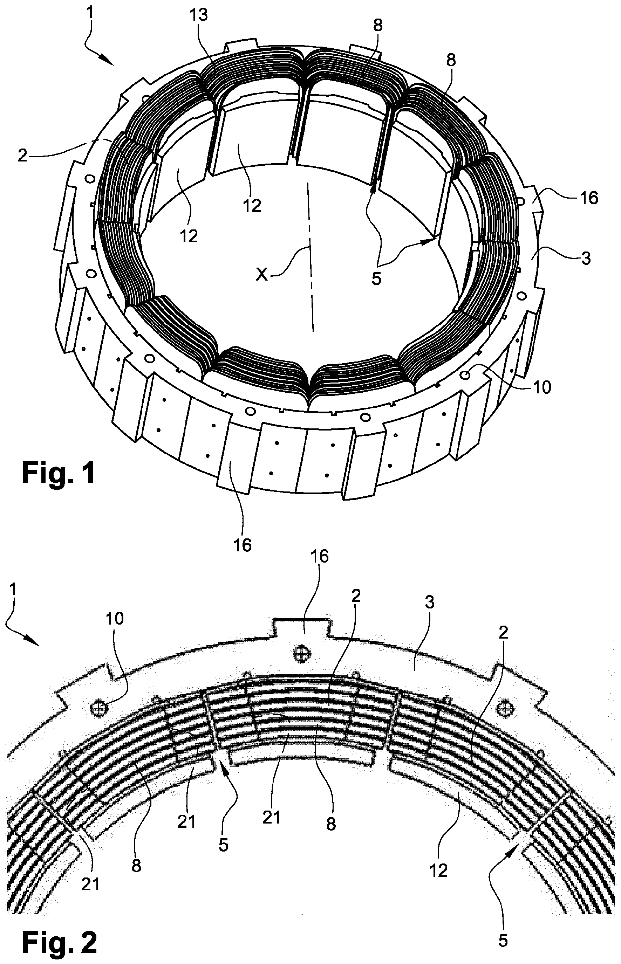

Les figures 1, 2, 3a et 3b montrent un stator 1 d'axe X pour machine électrique tournante, telle qu'un alternateur, un moteur ou un alterno-démarreur. Ce stator 1 comporte des dents 2 réparties régulièrement sur la périphérie interne d'une culasse 3 et s'étendant vers l'intérieur du stator 1. Le stator 1 comporte également des encoches 5, deux encoches 5 consécutives étant séparées par une dent 2 destinée à recevoir une bobine 8. La culasse 3 consiste en une bande de matière reliant les dents 2 entre elles s'étendant entre le fond des encoches 5 et la périphérie externe du stator 1.

Afin de diminuer les courants de Foucault, le corps du stator 1 est réalisé sous la forme d'un empilement de tôles en matière ferromagnétique s'étendant dans un plan radial perpendiculaire à l'axe X. Dans le plan radial, les tôles de forme annulaire sont découpées de manière à délimiter le contour de chaque dent 2. Les tôles sont maintenues au moyen de rivets 10 traversant axialement de part en part l'empilement de tôles pour formation d'un stator 1 manipulable et transportable.

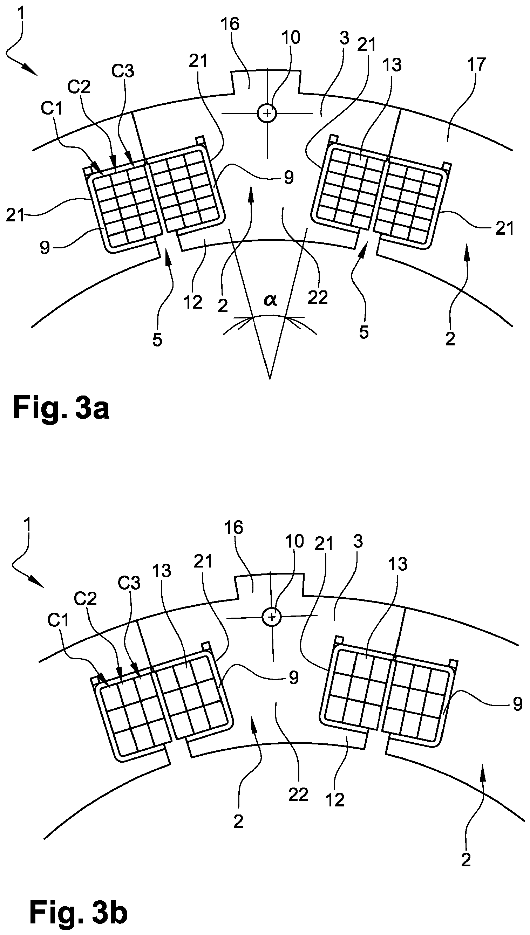

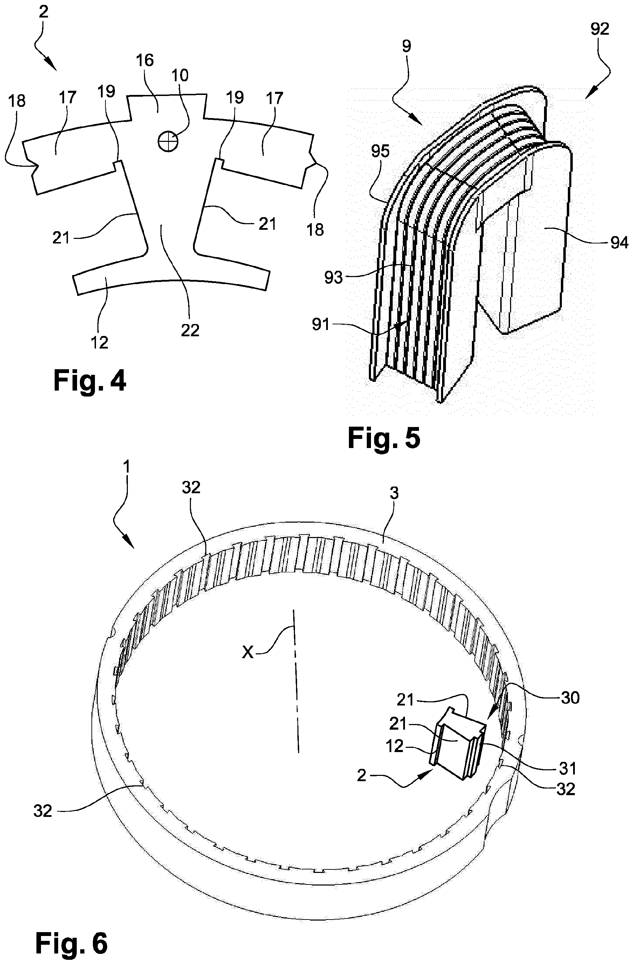

Dans une forme de réalisation, deux bobines 8 sont implantées dans une même encoche 5. Chaque bobine 8 est enroulée autour de l'une des dents 2 délimitant l'encoche 5 par l'intermédiaire d'un isolant de bobine 9 visible sur les figures 3a, 3b et 5 et décrit plus précisément ci-après. Les bobines 8 sont interconnectées entre elles, par exemple par soudure ou à l'aide d'un connecteur (non représenté) pour former une phase de la machine qui pourra être du type polyphasé.

Le stator 1 est destiné à être installé autour d'un rotor de sorte que les extrémités libres des dents 2 délimitent, de manière connue, un entrefer avec la périphérie externe du rotor de la machine électrique tournante. Le rotor pourra comporter un corps réalisé en tôle feuilletée qui présente des logements. Des aimants permanents sont positionnés à l'intérieur d'au moins certains de ces logements comme visible par exemple dans les figures 1 et 2 du document EP0803962. En variante, le rotor de la machine pourra être un rotor à griffes comme dans le document FR2890798, ou à pôles saillants. En variante, le rotor à griffes ou à pôles saillants pourra comporter également des aimants permanents.

Plus précisément, comme cela est bien visible sur les figures 3a, 3b et 4, chaque dent 2 présente des flancs latéraux 21 parallèles à l'axe X du stator 1 qui sont inclinés l'un par rapport à l'autre. L'inclinaison des flancs 21 est telle que deux flancs 21 en vis-à-vis correspondant aux bords délimitant une encoche 5 sont parallèles l'un par rapport à l'autre. L'angle α entre deux flancs latéraux 21 qui se coupent suivant une droite située vers l'intérieur du stator 1 (cf. figure 3a) est par exemple compris entre 10 et 30 degrés. Chaque dent 2 comporte également des faces 22 d'extrémité axiales perpendiculaires à l'axe X reliées entre elles par les flancs latéraux 21. Ces faces 22 présentent ainsi en vue de dessus sensiblement la forme d'un trapèze dont le plus grand côté est situé du côté de la culasse 3.

Chaque dent 2 comporte en outre un pied de dent 12 qui s'étend de part et d'autre de la partie de la dent 2 autour de laquelle est enroulée la bobine 8. Les parties des pieds de dent 12 de deux dents 2 adjacentes tournées l'une vers l'autre s'étendent sensiblement parallèlement au fond de l'encoche 5 correspondante. Cette configuration d'encoche combinée à l'utilisation d'un fil 13 à section sensiblement rectangulaire (forme en méplat) pour réaliser les bobines 8 permet de maximiser le taux de remplissage des encoches 5 en facilitant notamment le remplissage des encoches 5 au niveau des angles entre les dents 2 et la culasse 3 (cf. figures 3a et 3b).

Dans le mode de réalisation de la figure 3a, le fil 13 de forme rectangulaire présente son plus grand côté orienté perpendiculairement aux flancs latéraux 21 des dents 2. Le fil 13 est enroulé sur plusieurs tours autour d'une dent 2 de manière compacte en sorte que chaque demi-encoche est remplie par trois couches C1, C2, C3 de six spires chacune soit 18 spires par demi-encoche. Chaque encoche 5 est ainsi remplie par 36 spires au total. Les fils 13 consistent en un fil électriquement conducteur, par exemple en un fil de cuivre et/ou en aluminium, revêtu d'un isolant électrique, tel que de l'émail.

Bien entendu, afin d'adapter les performances de la machine en fonction de l'application, il sera possible de modifier le nombre de spires contenues dans chaque encoche 5 en faisant varier le nombre de couches de spires et/ou le nombre de spires dans chaque couche de spire C1, C2, C3 ou dans certaines d'entre elles uniquement, ainsi que la section du fil 13. Il sera également possible de modifier l'orientation du fil 13 de forme rectangulaire. Ainsi, dans ce mode de réalisation de la figure 3b, le fil 13 présente son plus grand côté orienté parallèlement aux flancs latéraux 21 des dents 2. Dans l'exemple représenté, on a 3 spires par couche C1, C2, C3, soit 9 spires par demi-encoches et donc 18 spires par encoche 5.

Il serait possible que différentes portions d'une même bobine soient formées à partir du fil 13 ayant une orientation qui varie suivant la portion de bobine considérée. Autrement dit, l'orientation du fil en forme de méplat 13 pourra être différente d'une portion de bobine à une autre.

De préférence, le stator 1 comporte également des moyens d'assemblage 16 en forme de queue d'aronde s'étendant depuis la périphérie externe de la culasse pour la fixation avec un boîtier (non représenté) de la machine muni de paliers pour le montage à rotation de l'arbre de rotor.

Comme montré sur la figure 4, le stator 1 est de préférence à dents 2 rapportées. Chaque dent rapportée 2 comporte en l'occurrence deux branches 17 correspondant à une portion circonférentielle de la culasse 3 qui s'étendent de part et d'autre de la portion de la dent 2 portant la bobine 8. Des moyens complémentaires de liaison 18 sont disposés sur les faces extrémités des branches 17. Ces moyens 18 permettent de raccorder les branches 17 de deux dents 2 adjacentes en position dans laquelle les branches 17 de ces deux dents 2 se trouvent dans le prolongement l'une de l'autre. Il est ainsi possible de faire coopérer les branches 17 entre elles de manière annulaire pour former une couronne de dents 2. Comme indiqué précédemment, chaque dent 2 rapportée est à flancs latéraux 21 inclinés l'un par rapport à l'autre, en sorte que lorsque le stator 1 est assemblé, deux dents 2 adjacentes délimitent une encoche 5 à bords parallèles deux à deux. Le stator 1 ainsi formé sera ensuite fixé au boîtier à l'aide des moyens d'assemblage 16 s'étendant depuis une périphérie externe des branches 17 de chaque dent 2.

En outre, deux fentes 19 sont ménagées de part et d'autre de la dent 2. Ces fentes 19 sont situées au niveau de la jonction entre la portion de la dent 2 portant la bobine 8 et les branches 17 pour permettre la pénétration de saillies appartenant à l'isolant de bobine 9. Une telle configuration permet d'assurer un bon maintien en position de l'isolant de bobine 9 lors d'une opération de soudage des extrémités des fils 13 des bobines 8 sur des bornes d'un connecteur. En variante, le stator 1 pourra être réalisé d'un seul tenant.

La figure 5 montre un isolant de bobine 9 destiné à être positionné autour de chaque dent 2. Cet isolant 9 est un isolant électrique réalisé ici en matière électriquement isolante et moulable par exemple en matière plastique telle que du PA 6.6. L'isolant 9 présente un corps 91 formé par deux parties 92 découpées verticalement, une seule partie étant représentée sur la figure. Ces parties sont destinées à être assemblées par exemple par encliquetage autour de la dent 2. Lorsque les parties 92 sont assemblées entre elles, le corps 91 comporte un cadre 93 positionné autour d'une dent 2. Le corps 91 comporte en outre un rebord avant 94 et un rebord arrière 95 définissant avec les parois du cadre 93 une gorge de montage de la bobine 8. Le cadre 93 à face sensiblement plane pourra toutefois comporter des empreintes à sa périphérie pour faciliter le guidage du fil 13 lors de l'opération de bobinage. Le rebord arrière 95 est destiné à être positionné à proximité de la culasse 3 tandis que le rebord avant 94 est situé du côté du pied de dent 12. Alternativement, les deux parties 92 pourront être découpées verticalement l'une par rapport à l'autre suivant un plan médian ou non de l'isolant 9.

En variante, l'isolant 9 prend la forme d'une membrane fine, réalisée dans un matériau électriquement isolant et conducteur de chaleur, par exemple un matériau aramide de type dit Nomex (marque déposée). Cette membrane fine est pliée de manière que l'isolant 9 est plaqué contre les faces d'une encoche 5 afin d'isoler chaque bobine 8 par rapport à la dent 2 correspondante.

Dans un autre mode de réalisation montré à la figure 6, le stator 1 est formé par une pluralité de dents 2 rapportées. Du côté de leur extrémité libre, chaque dent 2 comporte un pied de dent 12. Le stator 1 comporte en outre le support 3 de forme annulaire d'orientation axiale réalisé également en tôle feuilletée correspondant à la culasse 3 du stator 1. Des moyens d'assemblage 30 interviennent entre le support 3 et les dents 2. Ces moyens d'assemblage 30 sont formés par un tenon 31 et une mortaise 32 réalisée dans la paroi interne du support 3. En variante, la mortaise 32 est réalisée dans la dent 2, tandis que le tenon 31 appartient au support 3. En variante, l'assemblage entre les dents 2 et le support 3 est effectué par emmanchement à force, collage, ou soudage.

Bien entendu, le nombre de dents 2 du stator 1 égal à 12 pour la réalisation de la figure 1 ou à 36 pour la réalisation de la figure 6 ainsi que la section de la culasse 3 et des dents 2 pourront varier en fonction de l'application afin d'adapter les performances électriques de la machine. En variante, les dents 2 pourront ne pas être réparties circonférentiellement de manière régulière. En variante, les dents 2 sont dépourvues de pied de dent.

On décrit ci-après une opération de bobinage du stator 1 selon l'invention.

On installe dans un premier temps les isolants de bobine 9 autour des dents 2 du stator 1. A cet effet, les parties 92 sont positionnées de part et d'autre de la dent 2 et assemblées entre elles par encliquetage. L'isolant 9 ainsi formé est retenu radialement sur la dent par le pied de dent 12.

Le fil 13 est enroulé de manière compacte autour de l'isolant de bobine 9 et ce de manière aisée et rapide puisque cela est réalisé en dehors des encoches 5 dans le cas de dents 2 rapportées. Le bobinage est effectué par exemple sur trois couches d'enroulements C1, C2, C3 superposées les unes sur les autres. En variante, dans le cas où le stator 1 est dépourvu de pied de dent 12, il sera possible de réaliser le bobinage indépendamment des dents 2 du stator 1 en réalisant les bobines 8 autour de l'isolant de bobine 9 monté sur un support 3. L'ensemble préformé comportant un isolant de bobine 9 et une bobine 8 est ensuite enfilé autour de la dent 2 concernée.

On effectue ensuite une opération d'imprégnation du bobinage du stator 1 par un vernis d'imprégnation. A cette fin, le stator 1 est chauffé ainsi que le vernis pour être introduit à l'état liquide goutte à goutte dans les bobines 8. En variante, l'opération d'imprégnation pourra être réalisée par trempage partiel et roulage du stator assemblé dans un bain de vernis d'imprégnation. Cette technique est particulièrement bien adaptée à l'invention dans la mesure où la culasse 3 est rapportée par rapport au boîtier. En variante, l'opération d'imprégnation pourra être réalisée sous vide ou par trempage simple complet du stator 1 dans un bain de vernis d'imprégnation.

Ensuite, le vernis est refroidi en se polymérisant. Le vernis est par exemple à base de résine époxy, de résine polyester non saturée ou de résine silicone. Bien entendu, de manière connue, on peut ajouter aux résines des accélérateurs pour diminuer la durée de l'imprégnation.

La machine électrique tournante pourra appartenir à un véhicule automobile et être de manière précitée un alternateur, un alterno-démarreur qui est un alternateur réversible, un moteur électrique ou un ralentisseur électromagnétique.

Dans le cadre d'un alternateur appartenant à un prolongateur d'autonomie d'un véhicule électrique (Range-extender en Anglais), le rotor pourra être un rotor à aimants permanents avec plusieurs aimants par logement soumis à l'action d'un ressort comme décrit dans la demande FR12/54733 déposée le 24/05/2012.

## Revendications

1. Stator bobiné (1) de machine électrique tournante comportant une culasse (3), des dents (2) réparties sur une périphérie interne de ladite culasse (3) s'étendant vers l'intérieur dudit stator (1) et délimitant deux à deux des encoches (5), ainsi que des bobines (8) formées autour de chaque dent (2) à partir d'un fil (13) ayant une section de forme sensiblement rectangulaire, des flancs latéraux (21) d'une même dent (2) étant inclinés l'un par rapport à l'autre, en sorte que deux flancs latéraux (21) de deux dents (2) adjacentes tournés l'un vers l'autre correspondant aux bords délimitant une encoche sont parallèles entre eux,
**caractérisé par le fait que** chaque dent (2) comporte un pied de dent (12) qui s'étend de part et d'autre de la partie de la dent (2) autour de laquelle est enroulée la bobine (8), et **par le fait que** les parties des pieds de dent (12) de deux dents (2) adjacentes tournées l'une vers l'autre s'étendent sensiblement parallèlement au fond de l'encoche (5) correspondante.

2. Stator selon la revendication 1, **caractérisé en ce qu'**il comporte en outre un isolant de bobine (9) monté autour de chaque dent (2).

3. Stator selon la revendication 1 ou 2, **caractérisé en ce que** le fil de bobine (13) de forme rectangulaire présente son plus grand côté orienté perpendiculairement aux flancs latéraux (21) des dents (2) délimitant l'encoche (5) dans laquelle est positionné ledit fil de bobine.

4. Stator selon la revendication 1 ou 2, **caractérisé en ce que** le fil de bobine (13) de forme rectangulaire présente son plus grand côté orienté parallèlement aux flancs latéraux (21) des dents (2) délimitant l'encoche (5) dans laquelle est positionné ledit fil de bobine.

5. Stator selon la revendication 1 ou 2, **caractérisé en ce que** le fil de bobine (13) présente une section carrée.

6. Stator selon l'une des revendications 1 à 5, **caractérisé en ce qu'**il comporte des dents (2) rapportées.

7. Stator selon la revendication 6, **caractérisé en ce que** chaque dent rapportée (2) comporte deux branches (17) correspondant à une portion de la culasse (3), lesdites branches (17) de deux dents (2) adjacentes étant aptes à coopérer entre elles pour former ledit stator (1).

8. Stator selon la revendication 6, **caractérisé en ce que** les dents (2) rapportées comportent des moyens de fixation (30) sur une paroi annulaire formant ladite culasse (3) du stator (1).

9. Stator selon la revendication 2, **caractérisé en ce que** l'isolant de bobine (9) est réalisé en deux parties (92).

10. Stator selon la revendication 9, **caractérisé en ce que** les deux parties (92) de l'isolant de bobine (9) sont découpées suivant un plan horizontal perpendiculaire à un axe dudit stator (1).

11. Stator selon la revendication 2 ou l'une des revendications 3 à 10 quand dépendantes de la revendication 2, **caractérisé en ce qu'**il comporte des fentes (19) situées de part et d'autre de chaque dent (2) aptes à recevoir des saillies dudit isolant de bobine (9).

12. Stator selon l'une des revendications 1 à 11, **caractérisé en ce qu'**il comporte en outre des moyens d'assemblage (16) pour la fixation avec un boîtier de machine électrique tournante.

13. Procédé de fabrication d'un stator selon l'une quelconque des revendications 6 à 8, **caractérisé en ce que** un enroulement d'un fil (13) d'une bobine (8) autour d'une dent (2) rapportée est réalisé avant assemblage des dents rapportées pour former le stator (1).

14. Machine électrique tournante munie d'un stator bobiné (1) selon l'une des revendications précédentes.

## Patentansprüche

1. Bewickelter Stator (1) einer rotierenden elektrischen Maschine, welcher ein Polgestell (3), Zähne (2), die über einen Innenumfang des Polgestells (3) verteilt sind, sich in Richtung des Inneren des Stators (1) erstrecken und paarweise jeweils eine Nut (5) begrenzen, sowie Spulen (8), die um jeden Zahn (2) aus einem Draht (13) mit einem Querschnitt von im Wesentlichen rechteckiger Form gebildet sind, aufweist, wobei Seitenflanken (21) ein und desselben Zahns (2) relativ zueinander geneigt sind, derart, dass zwei einander zugewandte, den eine Nut begrenzenden Rändern entsprechende Seitenflanken (21) von zwei benachbarten Zähnen (2) zueinander parallel sind, **dadurch gekennzeichnet, dass** jeder Zahn (2) einen Zahnfuß (12) aufweist, welcher sich beiderseits des Teils des Zahns (2) erstreckt, um welchen die Spule (8) gewickelt ist, und dadurch, dass sich die einander zugewandten Teile der Zahnfüße (12) von zwei benachbarten Zähnen (2) im Wesentlichen parallel zum Boden der entsprechenden Nut (5) erstrecken.

2. Stator nach Anspruch 1, **dadurch gekennzeichnet, dass** er außerdem an jedem Zahn (2) einen Spulenisolator (9) aufweist, der um ihn herum angebracht ist.

3. Stator nach Anspruch 1 oder 2, **dadurch gekennzeichnet, dass** der Spulendraht (13) von rechteckiger Form seine größere Seite senkrecht zu den Seitenflanken (21) der Zähne (2) ausgerichtet aufweist, welche die Nut (5) begrenzen, in welcher der Spulendraht positioniert ist.

4. Stator nach Anspruch 1 oder 2, **dadurch gekennzeichnet, dass** der Spulendraht (13) von rechteckiger Form seine größere Seite parallel zu den Seitenflanken (21) der Zähne (2) ausgerichtet aufweist, welche die Nut (5) begrenzen, in welcher der Spulendraht positioniert ist.

5. Stator nach Anspruch 1 oder 2, **dadurch gekennzeichnet, dass** der Spulendraht (13) einen quadratischen Querschnitt aufweist.

6. Stator nach einem der Ansprüche 1 bis 5, **dadurch gekennzeichnet, dass** er angesetzte Zähne (2) aufweist.

7. Stator nach Anspruch 6, **dadurch gekennzeichnet, dass** jeder angesetzte Zahn (2) zwei einem Abschnitt des Polgestells (3) entsprechende Schenkel (17) aufweist, wobei die Schenkel (17) von zwei benachbarten Zähnen (2) geeignet sind zusammenzuwirken, um den Stator (1) zu bilden.

8. Stator nach Anspruch 6, **dadurch gekennzeichnet, dass** die angesetzten Zähne (2) Mittel zur Befestigung (30) an einer ringförmigen Wand aufweisen, die das Polgestell (3) des Stators (1) bildet.

9. Stator nach Anspruch 2, **dadurch gekennzeichnet, dass** der Spulenisolator (9) aus zwei Teilen (92) hergestellt ist.

10. Stator nach Anspruch 9, **dadurch gekennzeichnet, dass** die zwei Teile (92) des Spulenisolators (9) entlang einer horizontalen Ebene zugeschnitten sind, die zu einer Achse des Stators (1) senkrecht ist.

11. Stator nach Anspruch 2 oder nach einem der Ansprüche 3 bis 10, wenn abhängig von Anspruch 2, **dadurch gekennzeichnet, dass** er beiderseits jedes Zahns (2) befindliche Schlitze (19) aufweist, die geeignet sind, Vorsprünge des Spulenisolators (9) aufzunehmen.

12. Stator nach einem der Ansprüche 1 bis 11, **dadurch gekennzeichnet, dass** er außerdem Verbindungsmittel (16) zur Befestigung an einem Gehäuse einer rotierenden elektrischen Maschine aufweist.

13. Verfahren zur Herstellung eines Stators nach einem der Ansprüche 6 bis 8, **dadurch gekennzeichnet, dass** eine Wicklung eines Drahtes (13) einer Spule (8) um einen angesetzten Zahn (2) vor der Montage der angesetzten Zähne, um den Stator (1) zu bilden, hergestellt wird.

14. Rotierende elektrische Maschine, welche mit einem bewickelten Stator (1) nach einem der vorhergehenden Ansprüche ausgestattet ist.

## Claims

1. Wound stator (1) of a rotating electric machine comprising a field frame (3), teeth (2) distributed over an inner periphery of said field frame (3) extending towards the interior of said stator (1) and pairwise delimiting notches (5), and coils (8) formed around each tooth (2) from a wire (13) having a section of substantially rectangular form, lateral flanks (21) of a same tooth (2) being inclined with respect to one another, such that two lateral flanks (21) of two adjacent teeth (2) facing one another corresponding to the edges delimiting a notch are parallel to one another,
**characterized in that** each tooth (2) comprises a tooth root (12) which extends on either side of the part of the tooth (2) around which the coil (8) is wound, and **in that** the parts of the tooth roots (12) of two adjacent teeth (2) facing one another extend substantially parallel to the bottom of the corresponding notch (5).

2. Stator according to Claim 1, **characterized in that** it further comprises a coil insulator (9) mounted around each tooth (2).

3. Stator according to Claim 1 or 2, **characterized in that** the coil wire (13) of rectangular form has its largest side oriented at right angles to the lateral flanks (21) of the teeth (2) delimiting the notch (5) in which said coil wire is positioned.

4. Stator according to Claim 1 or 2, **characterized in that** the coil wire (13) of rectangular form has its largest side oriented parallel to the lateral flanks (21) of the teeth (2) delimiting the notch (5) in which said coil wire is positioned.

5. Stator according to Claim 1 or 2, **characterized in that** the coil wire (13) has a square section.

6. Stator according to one of Claims 1 to 5, **characterized in that** it comprises add-on teeth (2).

7. Stator according to Claim 6, **characterized in that** each add-on tooth (2) comprises two branches (17) corresponding to a portion of the field frame (3), said branches (17) of two adjacent teeth (2) being able to cooperate with one another to form said stator (1).

8. Stator according to Claim 6, **characterized in that** the add-on teeth (2) comprise fixing means (30) for fixing onto an annular wall forming said field frame (3) of the stator (1) .

9. Stator according to Claim 2, **characterized in that** the coil insulator (9) is produced in two parts (92) .

10. Stator according to Claim 9, **characterized in that** the two parts (92) of the coil insulator (9) are cut along a horizontal plane at right angles to an axis of said stator (1).

11. Stator according to Claim 2 or one of Claims 3 to 10 when dependent on Claim 2, **characterized in that** it comprises slits (19) situated on either side of each tooth (2) capable of receiving protuberances of said coil insulator (9).

12. Stator according to one of Claims 1 to 11, **characterized in that** it further comprises assembly means (16) for fixing with a rotating electric machine housing.

13. Method for manufacturing a stator according to any one of Claims 6 to 8, **characterized in that** a winding of a wire (13) of a coil (8) around an add-on tooth (2) is done before the assembly of the add-on teeth to form the stator (1) .

14. Rotating electric machine provided with a wound stator (1) according to one of the preceding claims.
